# EUROPÄISCHE PATENTSCHRIFT

(11) **EP 3 060 433 B1**
(45) Veröffentlichungstag und Bekanntmachung des Hinweises auf die Patenterteilung: **03.10.2018**
(21) Anmeldenummer: 14786689.1
(22) Anmeldetag: 22.10.2014
(51) Int. Cl.: B60R 21/00

(54) **SITZANORDNUNG**
SEAT ARRANGEMENT
SYSTÈME DE SIÈGE

(30) Priorität: 24.10.2013 DE 102013221657
(43) Veröffentlichungstag der Anmeldung: 31.08.2016
(73) Patentinhaber: Volkswagen Aktiengesellschaft, 38440 Wolfsburg (DE)
(72) Erfinder: BREYVOGEL, Jörg, 38165 Lehre (DE)
(86) Internationale Anmeldenummer: PCT/EP2014/072613
(87) Internationale Veröffentlichungsnummer: WO 2015/059174

(56) Entgegenhaltungen:
- DE-A1- 10 018 170
- DE-A1- 19 820 567
- DE-A1- 19 904 071
- DE-A1-102009 016 888

## Beschreibung

Die Erfindung betrifft eine gemäß dem Oberbegriff des Anspruchs 1 ausgebildete Sitzanordnung für ein Kraftfahrzeug.

Eine Sitzanordnung der eingangsgenannten Art ist z.B. aus DE 100 18 170 A1 bekannt. Bei dieser Sitzanordnung ist eine Seitenairbageinrichtung benachbart zu einer seitlichen Begrenzung einer Rücklehne der Sitzanordnung in die Rücklehne integriert, um bei einer außen auf seitliche Strukturen einer Karosserie des Kraftfahrzeugs einwirkenden Stoßbelastung, wie z.B. einem Seitenaufprall eines anderen Fahrzeugs, einer in einem Fahrgastraum des Kraftfahrzeugs auf der Sitzanordnung befindlichen Person Schutz gegen seitenstoßbedingte Verletzungen zu bieten.

Problematisch an dieser bekannten Sitzanordnung könnte jedoch sein, dass Verletzungen, die infolge der Entfaltung des Airbags entstehen können, nicht vollständig vermieden werden können.

Der Erfindung liegt die Aufgabe zugrunde, eine Sitzanordnung gemäß dem Oberbegriff des Anspruchs 1 so bereitzustellen, dass gasskissenentfaltungsbedingte Verletzungen einer auf der Sitzanordnung befindlichen Person verhindert werden.

Dies wird mit den Merkmalen im kennzeichnenden Teil des Anspruchs 1 erreicht. Weiterbildungen der Erfindung sind in den abhängigen Ansprüchen definiert.

Gemäß der Erfindung weist eine Sitzanordnung für ein Kraftfahrzeug einen Sitz gemäß Anspruch 1.

Die erfindungsgemäße Sitzanordnung zeichnet sich dadurch aus, dass die Sitzpolsterung als Randbereich eine die Sitzfläche höhenmäßig übersteigende Wulst aufweist, dass die Sitzanordnung eine Sensoreinrichtung aufweist, mit einem ersten Drucksensor, der so in die Wulst eingreift, dass er eine vonseiten der Sitzfläche schräg von oben aus auf die Wulst wirkende Druckbelastung erkennen und bei Erkennen solch einer Druckbelastung ein erstes Erkennungssignal erzeugen kann, und mit einem zweiten Drucksensor, der so in die Wulst eingreift, dass er eine vertikal von oben aus auf die Wulst wirkende Druckbelastung erkennen und bei Erkennen solch einer Druckbelastung ein zweites Erkennungssignal erzeugt, wobei mittels des ersten Erkennungssignales von der elektronischen Steuervorrichtung, mit der die Sensoreinrichtung verbunden ist, ein Warnsignal erzeugt und mittels einer visuellen Ausgabevorrichtung und/oder einer tonerzeugenden Ausgabevorrichtung für die Personen im Fahrgastraum wahrnehmbar ist, und dass bei Vorliegen des zweiten Erkennungssignales dieses von der elektronischen Steuervorrichtung als das Überlappungssignal erkannt wird und von der elektronischen Steuervorrichtung auf Basis eines Überlappungssignales, wenn eine auf der Sitzanordnung befindliche Person einen an der Rücklehne benachbart zur seitlichen Rücklehnenbegrenzung ausgebildeten nahtförmigen Gaskissenaustrittsbereich der Seitenairbageinrichtung überlappt, ein Deaktivierungssignal an die Seitenairbageinrichtung ausgegeben wird.

Durch den Versatz der Seitenairbageinrichtung, so dass diese sich in Bezug auf seitliche Strukturen einer Karosserie des Fahrzeugs hinter der Seitenwange der Rücklehnenstruktur befindet, d.h. sich die Seitenwange in Breitenrichtung der Sitzanordnung bzw. Querrichtung des Kraftfahrzeugs zwischen den seitlichen Strukturen der Karosserie und der Seitenairbageinrichtung befindet, und durch die Überlappung der Seitenairbageinrichtung durch die Seitenwange bildet die Seitenwange eine strukturelle Abschirmung bzw. ein Schutzschild, welches bei einer außen auf die seitlichen Strukturen der Karosserie des Kraftfahrzeugs einwirkenden Stoßbelastung, wie z.B. einem Seitencrash, die dann in den Fahrgastraum intrudierenden bzw. eindringenden seitlichen Strukturen der Karosserie, wie z.B. eine B-Säule, vor Erreichen der Seitenairbageinrichtung abfangen und damit eine Beschädigung der Seitenairbageinrichtung verhindern kann.

Durch dieses sicherere Verhindern einer Beschädigung der Seitenairbageinrichtung kann die Schutzfunktion der Sitzanordnung für eine im Fahrgastraum auf der Sitzanordnung befindliche Person gegen seitenstoßbedingte Verletzungen zuverlässiger gewährleistet werden.

Bevorzugt können die Sitzstruktur und die Rücklehnenstruktur aus strukturelle Festigkeit und Steifigkeit bereitstellendem Metall hergestellt sein, also jeweils eine tragende Metallstruktur bilden. Allerdings ist es im Rahmen der Erfindung auch möglich, dass die Sitzstruktur und/oder die Rücklehnenstruktur aus einem anderen strukturelle Festigkeit und Steifigkeit bereitstellendem Material wie z.B. einem Kohlefaser-Verbundwerkstoff oder aus einer Kombination von Metall und anderen strukturelle Festigkeit und Steifigkeit bereitstellenden Materialien hergestellt sind.

Gemäß einer Ausführungsform der Erfindung weist die Seitenwange in Breitenrichtung der Sitzanordnung gesehen eine solche Breite auf, dass sie die Seitenairbageinrichtung aufseiten der seitlichen Rücklehnenbegrenzung vollständig überdeckt.

Auf diese Weise liegt die Seitenairbageinrichtung in Breitenrichtung der Sitzanordnung gesehen vollständig sozusagen im Schatten der Seitenwange, wodurch ein noch besserer Schutz der Seitenairbageinrichtung gegen Beschädigung durch in den Fahrgastraum eindringende seitliche Strukturen der Karosserie gewährleistet wird.

Gemäß einer weiteren Ausführungsform der Erfindung ist die Seitenairbageinrichtung in Breitenrichtung der Sitzanordnung mit einem vorbestimmten Abstand von der Seitenwange der Rücklehnenstruktur angeordnet.

Durch Vorsehen eines solchen vorbestimmten Abstandes der Seitenairbageinrichtung von der Seitenwange kann auch bei einer durch auf die Seitenwange Auftreffen von in den Fahrgastraum eindringenden seitlichen Strukturen der Karosserie verursachten Verformung der Seitenwange eine Beschädigung der Seitenairbageinrichtung sicher verhindert werden.

Gemäß noch einer Ausführungsform der Erfindung ist die Sitzanordnung als Sitzbank für ein als Transporter ausgebildetes Kraftfahrzeug konfiguriert, wobei die Sitzstruktur zur Bereitstellung struktureller Abmessungen und struktureller Festigkeit zur sitzenden Aufnahme mehrerer Personen konfiguriert ist, und wobei die Rücklehnenstruktur zur Bereitstellung struktureller Abmessungen und struktureller Festigkeit zur rückenseitigen Abstützung der mehreren Personen konfiguriert ist.

Ganz besonders vorteilhaft lässt sich die Erfindung bei einer Sitzbank eines Transporters anwenden, da hier in der Regel ein geringer Abstand der seitlichen Begrenzungen der Sitzbank von den seitlichen Strukturen der Karosserie des Transporters gegeben ist.

Gemäß noch einer weiteren Ausführungsform der Erfindung ist die Sitzbank als Doppelbeifahrersitzbank für einen Transporter konfiguriert, wobei die Sitzstruktur zur Bereitstellung struktureller Abmessungen und struktureller Festigkeit zur sitzenden Aufnahme von zwei Personen konfiguriert ist, und wobei die Rücklehnenstruktur zur Bereitstellung struktureller Abmessungen und struktureller Festigkeit zur rückenseitigen Abstützung der zwei Personen konfiguriert ist.

Gerade im Fall einer Doppelbeifahrersitzbank eines Transporters kann der Abstand der seitlichen Begrenzungen der Sitzbank von den seitlichen Strukturen der Karosserie des Transporters besonders gering sein, da hier ggf. die B-Säule der seitlichen Strukturen der Karosserie in den Fahrgastraum hinein vorsteht. Damit ist eine Anwendung der Erfindung gerade in diesem Fall besonders zu bevorzugen.

Gemäß einer weiteren Ausführungsform der Erfindung weist die Sitzanordnung außerdem eine Sensoreinrichtung auf, die eingerichtet ist zu erkennen, wenn eine auf der Sitzanordnung befindliche Person einen an der Rücklehne, d.h. in einer die Anlehnfläche aufweisenden Vorderseite der Rückenlehne, benachbart zur seitlichen Rücklehnenbegrenzung ausgebildeten Gaskissenaustrittsbereich der Seitenairbageinrichtung überlappt, und bei Überlappung ein Überlappungssignal auszugeben bzw. auszulösen, wobei die Sensoreinrichtung funktionell mit der Seitenairbageinrichtung verbunden ist, so dass die Seitenairbageinrichtung bei Ausgabe des Überlappungssignals deaktiviert wird.

Bei Gebrauch eines Transporter kann es vorkommen, dass auf der als Doppelbeifahrersitzbank ausgebildeten Sitzanordnung zwei relativ große bzw. körperlich breit gebaute Personen Platz nehmen, wodurch der Gaskissenaustrittsbereich vom Oberkörper der außen sitzenden Person überlappt bzw. teilweise oder vollständig verdeckt werden kann. Dies kann bei Auslösung der Seitenairbageinrichtung zu Verletzungen dieser außen sitzenden Person führen. Auch ist es möglich, dass bei Einzelbelegung der Doppelbeifahrersitzbank die einzelne Person so ungünstig sitzt, dass sie den Gaskissenaustrittsbereich teilweise oder vollständig verdeckt, was auch hier bei Auslösung der Seitenairbageinrichtung zu Verletzungen dieser Person führen kann. Durch die Deaktivierung bei Erkennung solch einer Verdeckung bzw. Überlappung des Gaskissenaustrittsbereichs können somit Verletzungen verhindert werden und kann damit die Betriebssicherheit der Schutzfunktion der Sitzanordnung erhöht werden.

Die funktionelle Verbindung der Sensoreinrichtung mit der Seitenairbageinrichtung kann z.B. über eine bevorzugt elektronische Steuervorrichtung für die Seitenairbageinrichtung und zugehörige elektrische Leitungen realisiert sein. Aber auch eine drahtlose funktionelle Verbindung der Sensoreinrichtung mit der Seitenairbageinrichtung direkt oder über die Steuervorrichtung mittels z.B. Nahbereichsfunk ist denkbar.

Die Sensoreinrichtung kann am Sitz und/oder an der Rücklehne vorgesehen sein und kann z.B. einen oder mehrere optische und/oder mechanische Sensoren aufweisen.

Gemäß einer Ausführungsform der Erfindung ist die Sensoreinrichtung benachbart zu einer zu der seitlichen Rücklehnenbegrenzung korrespondierenden seitlichen Sitzbegrenzung in den Sitz integriert.

Dies hat den Vorteil, dass auch kleine Personen, die einen Sensor an der Rücklehne eventuell nicht auslösen würden bzw. nicht in dessen Erfassungsbereich gelangen können, und auch Personen, die sich während der Fahrt nach vorn beugen und dabei ggf. aus dem Erfassungsbereich eines an der Rücklehne vorgesehen Sensors gelangen würden, sicher erfasst werden können.

Gemäß noch einer Ausführungsform der Erfindung greift die Sensoreinrichtung als Drucksensoreinrichtung ausgebildet in die Sitzpolsterung ein, so dass die Sensoreinrichtung in einem in Breitenrichtung der Sitzanordnung eine vorbestimmte Breite aufweisenden seitlichen Randbereich eine Druckbelastung der Sitzpolsterung erkennen und bei Erkennen solch einer Druckbelastung das Überlappungssignal ausgeben kann.

Bevorzugt kann der Drucksensor an der Sitzstruktur befestigt und/oder abgestützt sein und sich mit seinem sensitiven Element in das Sitzpolster hinein erstrecken.

Der Randbereich kann bevorzugt so breit ausgebildet sein, dass er in einer Tiefenrichtung der Sitzanordnung bzw. in einer Längsrichtung des Kraftfahrzeugs gesehen den bevorzugt linienförmigen bzw. nahtförmigen Gaskissenaustrittsbereich an der Rücklehne einschließt und sich bevorzugt in Breitenrichtung der Sitzanordnung bzw. in Querrichtung des Kraftfahrzeugs um ein vorbestimmtes Sicherheitsmaß in Richtung zur Mitte der Sitzanordnung hin breitenmäßig über den Gaskissenaustrittsbereich hinaus erstreckt.

Durch Vorsehen des die vorbestimmte Breite aufweisenden seitlichen Randbereichs, der insbesondere das vorbestimmte Sicherheitsmaß aufweist, kann eine drohende Überlappung des Gaskissenaustrittsbereichs frühzeitig erkannt werden und somit die Betriebssicherheit noch mehr gesteigert werden.

Gemäß einer weiteren Ausführungsform der Erfindung weist die Sitzpolsterung als Randbereich eine die Sitzfläche übersteigende Wulst auf, wobei die Sensoreinrichtung in die Wulst eingreift, so dass die Sensoreinrichtung eine Druckbelastung der Wulst erkennen und bei Erkennen einer Druckbelastung der Wulst das Überlappungssignal ausgeben kann.

Die Wulst kann bevorzugt als Seitenhaltwulst für die auf der Sitzanordnung seitlich außen befindliche Person vorgesehen sein und somit eine Doppelfunktion erfüllen, nämlich einerseits Seitenhalt bieten und andererseits eine taktile Warnung an die seitlich außen befindliche Person geben, dass sie seitlich ggf. ungünstig platziert ist.

Dadurch, dass die Sensoreinrichtung in die die Sitzfläche übersteigende Wulst eingreift, kann eine Erfassungssicherheit für eine Druckbelastung des Randbereichs erhöht werden, womit die Betriebssicherheit noch mehr gesteigert werden kann.

Gemäß noch einer weiteren Ausführungsform der Erfindung weist die Sensoreinrichtung einen ersten Drucksensor, der so in die Wulst eingreift, dass er eine vonseiten der Sitzfläche schräg von oben aus auf die Wulst wirkende Druckbelastung erkennen und bei Erkennen solch einer Druckbelastung ein erstes Erkennungssignal erzeugen kann, und einen zweiten Drucksensor auf, der so in die Wulst eingreift, dass er eine vertikal von oben aus auf die Wulst wirkende Druckbelastung erkennen und bei Erkennen solch einer Druckbelastung ein zweites Erkennungssignal erzeugen kann, wobei die Sensoreinrichtung eingerichtet ist, das Überlappungssignal auf Basis von wenigstens einem von dem ersten und dem zweiten Erkennungssignal auszugeben.

Mit anderen Worten kann gemäß der Erfindung das Überlappungssignal ausgegeben werden, wenn das erste und das zweite Erkennungssignal vorliegen oder wenn eines der beiden Erkennungssignale vorliegt. Bevorzugt kann bei Vorliegen des ersten Erkennungssignals von der bevorzugt elektronischen Steuervorrichtung, mit der die Sensoreinrichtung bevorzugt verbunden sein kann, ein Warnsignal erzeugt und mittels einer visuellen und/oder tonerzeugenden Ausgabevorrichtung für die Personen im Fahrgastraum wahrnehmbar gemacht werden. Bevorzugt kann bei Vorliegen des zweiten Erkennungssignals (mit oder ohne Vorliegen des ersten Erkennungssignals) dieses von der bevorzugt elektronischen Steuervorrichtung als das Überlappungssignal erkannt werden und kann von der Steuervorrichtung auf Basis des Überlappungssignals ein Deaktivierungssignal an die Seitenairbageinrichtung ausgegeben werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren beschrieben werden.
- Fig. 1: zeigt in struktureller Vorderansicht eine Sitzanordnung gemäß einer Ausführungsform der Erfindung.
- Fig. 2: zeigt eine Vorderansicht der Sitzanordnung von Fig. 1 inklusive einer Polsterung dieser.
- Fig. 3: zeigt eine vergrößerte schematische Schnittansicht von vorn eines Bereichs X aus Fig. 2.

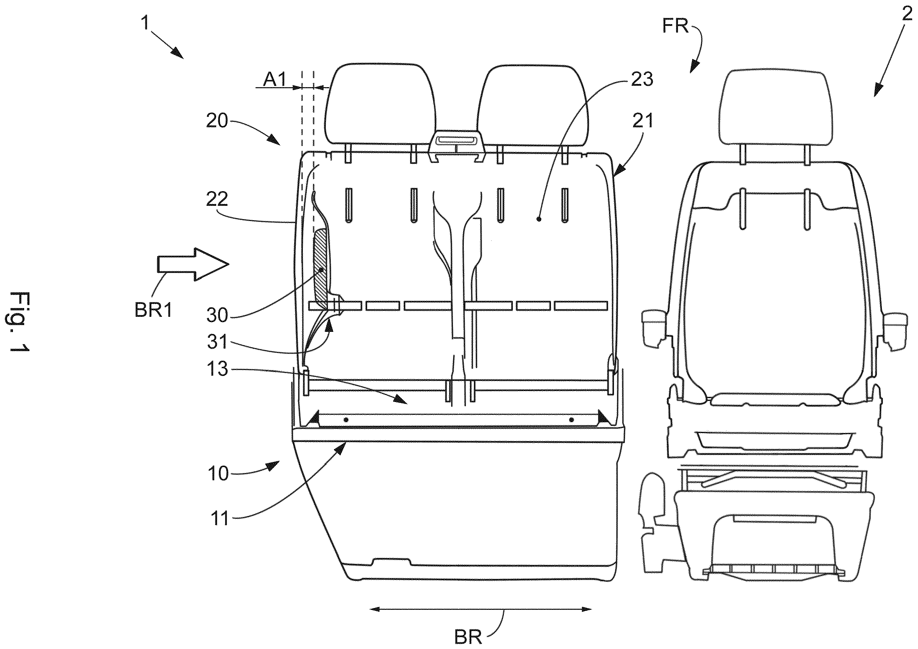

Im Folgenden werden unter Bezugnahme auf die Figuren 1 bis 3 erfindungsgemäße Ausführungsformen einer Sitzanordnung 1 für ein Kraftfahrzeug beschrieben werden.

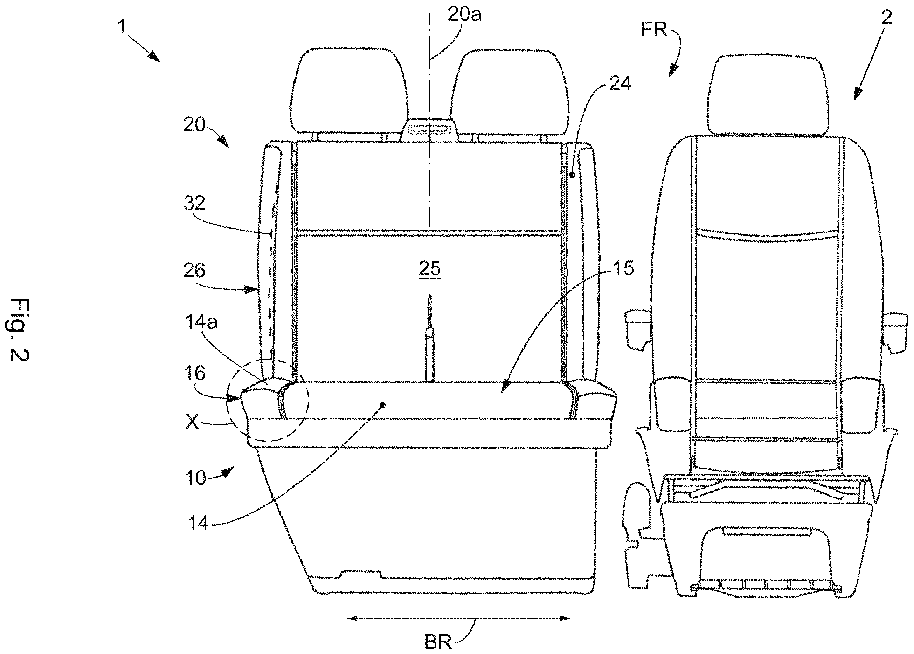

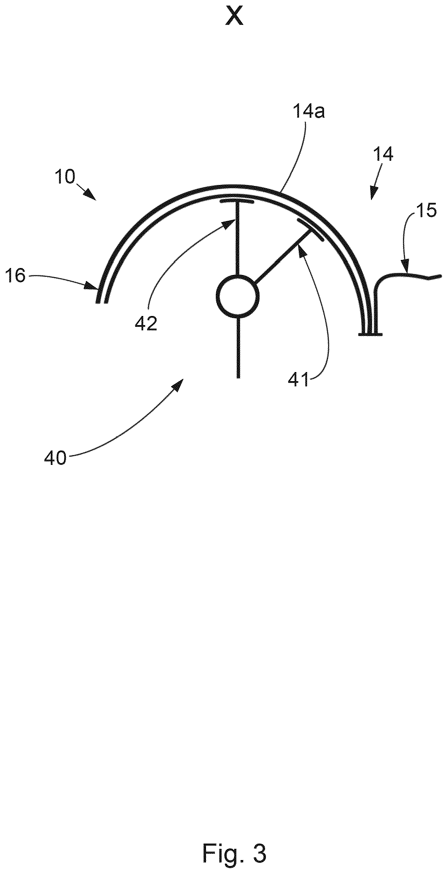

Wie aus den Figuren 1 und 2 ersichtlich, ist die Sitzanordnung 1 als Doppelbeifahrersitzbank eines als Transporter ausgebildeten Kraftfahrzeugs (nicht vollständig gezeigt) ausgebildet und zusammen mit einer Fahrersitzanordnung 2 in einem Fahrgastraum FR des Transporters lagefest angeordnet. Die Sitzanordnung weist einen Sitz 10, eine Rücklehne 20, eine Seitenairbageinrichtung 30 und eine Sensoreinrichtung 40 (siehe Fig. 3) auf.

Wie in den Figuren 1 und 2 gezeigt, weist der Sitz 10 eine bevorzugt metallische Sitzstruktur (mit einem Tragrahmen) 11 zur Bereitstellung struktureller Abmessungen und struktureller Festigkeit zur sitzenden Aufnahme von zwei Personen (nicht gezeigt) und eine Sitzpolsterung 14 auf, die zumindest auf einen Sitzflächenabschnitt 13 der Sitzstruktur 11 aufgebracht ist, so dass sie eine Sitzfläche 15 für die beiden Personen (wenn sitzend aufgenommen) bildet.

Die Rücklehne 20 weist eine bevorzugt metallische Rücklehnenstruktur (mit einem Tragrahmen) 21 zur Bereitstellung struktureller Abmessungen und struktureller Festigkeit zur rückseitigen Abstützung der beiden Personen (wenn sitzend aufgenommen) und eine Rücklehnenpolsterung 24 auf, die zumindest auf einen Anlehnflächenabschnitt 23 der Rücklehnenstruktur 21 aufgebracht ist, so dass sie eine Anlehnfläche 25 für die beiden Personen (wenn sitzend aufgenommen) bildet.

Die Seitenairbageinrichtung 30 ist benachbart zu einer seitlichen Rücklehnenbegrenzung 26 in die Rücklehne 20 integriert. Genauer ist die Seitenairbageinrichtung 30 so in die Rücklehne 20 integriert, dass sie in einer Breitenrichtung BR der Sitzanordnung 1 gegenüber einer zu der seitlichen Rücklehnenbegrenzung 26 korrespondierenden bevorzugt metallischen Seitenwange 22 der Rücklehnenstruktur 21 zu einer Mitte 20a der Rücklehne 20 hin versetzt angeordnet ist und in Breitenrichtung BR gesehen (wie durch einen eine Sichtrichtung BR1 in Fig. 1 angebenden Pfeil angedeutet) von der Seitenwange 22 aufseiten der seitlichen Rücklehnenbegrenzung 26 überlappt wird.

Bevorzugt kann die Seitenwange 22 in Breitenrichtung BR der Sitzanordnung 1 gesehen (gemäß der durch den Pfeil angegeben Sichtrichtung BR1) eine solche Breite aufweisen, dass die Seitenwange 22 die Seitenairbageinrichtung 30 aufseiten der seitlichen Rücklehnenbegrenzung 26 vollständig überdeckt.

Wie aus Fig. 1 ersichtlich, ist die Seitenairbageinrichtung 30 über eine damit verbundene Halterung 31 an der Rücklehnenstruktur 21 befestigt und bevorzugt in Breitenrichtung BR der Sitzanordnung 1 mit einem vorbestimmten Abstand A1 (z.B. 20 mm bis 30 mm) von der Seitenwange 22 der Rücklehnenstruktur 21 angeordnet.

Die Sensoreinrichtung 40 der Sitzanordnung 1 ist eingerichtet zu erkennen, wenn eine auf der Sitzanordnung 1 befindliche Person einen an der Rücklehne 20 benachbart zur seitlichen Rücklehnenbegrenzung 26 ausgebildeten nahtförmigen Gaskissenaustrittsbereich 32 (siehe die gestrichelte Linie in Fig. 2) der Seitenairbageinrichtung 30 überlappt, und bei Überlappung ein Überlappungssignal auszugeben, wobei die Sensoreinrichtung 40 funktionell mit der Seitenairbageinrichtung 30 verbunden ist, so dass die Seitenairbageinrichtung 30 bei Ausgabe des Überlappungssignals deaktiviert wird. Die funktionelle Verbindung der Sensoreinrichtung 40 mit der Seitenairbageinrichtung 30 ist bevorzugt über eine nicht gezeigte elektronische Steuervorrichtung für die Seitenairbageinrichtung 30 und zugehörige elektrische Leitungen (ebenfalls nicht gezeigt) realisiert.

Die Sensoreinrichtung 40 ist bevorzugt benachbart zu einer zu der seitlichen Rücklehnenbegrenzung 26 korrespondierenden seitlichen Sitzbegrenzung 16 (siehe Figuren 2 und 3) in den Sitz 10 integriert. Dabei greift die Sensoreinrichtung 40 bevorzugt als Drucksensoreinrichtung ausgebildet in die Sitzpolsterung 14 ein, so dass die Sensoreinrichtung 40 in einem in Breitenrichtung BR der Sitzanordnung 1 eine vorbestimmte Breite (z.B. 20 mm bis 40 mm) aufweisenden seitlichen Randbereich eine Druckbelastung der Sitzpolsterung 14 erkennen und bei Erkennen solch einer Druckbelastung das Überlappungssignal ausgeben kann. Hierzu weist die Sitzpolsterung 14 als Randbereich eine die Sitzfläche 15 höhenmäßig übersteigende Wulst 14a auf, wobei die Sensoreinrichtung 40 in die Wulst 14a eingreift, so dass die Sensoreinrichtung 40 eine Druckbelastung der Wulst 14a erkennen und bei Erkennen einer Druckbelastung der Wulst 14a das Überlappungssignal ausgeben kann.

Wie in Fig. 3 gezeigt, kann die Sensoreinrichtung 40 einen ersten Drucksensor 41, der so in die Wulst 14a eingreift, dass er eine vonseiten der Sitzfläche 15 schräg von oben aus auf die Wulst 14a wirkende Druckbelastung erkennen und bei Erkennen solch einer Druckbelastung ein erstes Erkennungssignal erzeugen kann, und einen zweiten Drucksensor 42 auf, der so in die Wulst 14a eingreift, dass er eine vertikal von oben aus auf die Wulst 14a wirkende Druckbelastung erkennen und bei Erkennen solch einer Druckbelastung ein zweites Erkennungssignal erzeugen kann.

In diesem Fall ist die Sensoreinrichtung 40 eingerichtet, das Überlappungssignal auf Basis von zweiten Erkennungssignal auszugeben. Mit anderen Worten kann das Überlappungssignal ausgegeben werden, wenn zweite Erkennungssignal vorliegt.

Bei Vorliegen des ersten Erkennungssignals von der elektronischen Steuervorrichtung, mit der die Sensoreinrichtung 30 verbunden ist, wird ein Warnsignal erzeugt und mittels einer visuellen Ausgabevorrichtung (z.B. Warnlampe) und/oder einer tonerzeugenden Ausgabevorrichtung (z.B. einem Summer) für die Personen im Fahrgastraum wahrnehmbar gemacht. Bei Vorliegen des zweiten Erkennungssignals (mit oder ohne Vorliegen des ersten Erkennungssignals) wird dieses dann von der elektronischen Steuervorrichtung als das Überlappungssignal erkannt und wird von der elektronischen Steuervorrichtung auf Basis des Überlappungssignals ein Deaktivierungssignal an die Seitenairbageinrichtung 30 ausgegeben.

Im Fazit wird bei den beschriebenen Ausführungsformen der erfindungsgemäßen Sitzanordnung 1 eine durch die Seitenairbageinrichtung 30 bereitgestellte Schutzfunktion für eine im Fahrgastraum FR auf der Sitzanordnung 1 befindliche Person gegen seitenstoßbedingte Verletzungen zuverlässiger gewährleistet. Zudem können durch die wie oben beschriebene situative Deaktivierung der Seitenairbageinrichtung 30 gaskissenentfaltungsbedingte Verletzungen einer auf der Sitzanordnung 1 befindlichen Person verhindert werden.

### Bezugszeichenliste

- 1: Sitzanordnung
- 2: Fahrersitzanordnung
- 10: Sitz
- 11: Sitzstruktur
- 13: Sitzflächenabschnitt
- 14: Sitzpolsterung
- 14a: Wulst
- 15: Sitzfläche
- 16: seitliche Sitzbegrenzung
- 20: Rücklehne
- 20a: Mitte der Rücklehne
- 21: Rücklehnenstruktur
- 22: Seitenwange
- 23: Anlehnflächenabschnitt
- 24: Rücklehnenpolsterung
- 25: Anlehnfläche
- 26: seitliche Rücklehnenbegrenzung
- 30: Seitenairbageinrichtung
- 31: Halterung
- 32: Gaskissenaustrittsbereich
- 40: Sensoreinrichtung
- 41: erster Drucksensor
- 42: zweiter Drucksensor
- FR: Fahrgastraum
- BR: Breitenrichtung
- BR1: Sichtrichtung
- A1: Abstand

## Patentansprüche

1. Sitzanordnung (1) für ein Kraftfahrzeug, aufweisend:
einen Sitz (10), der eine Sitzstruktur (11) zur Bereitstellung struktureller Abmessungen und struktureller Festigkeit zur sitzenden Aufnahme wenigstens einer Person und eine Sitzpolsterung (14) hat, die zumindest auf einen Sitzflächenabschnitt (13) der Sitzstruktur (11) aufgebracht ist, so dass sie eine Sitzfläche (15) für die wenigstens eine Person bildet,
eine Rücklehne (20), die eine Rücklehnenstruktur (21) zur Bereitstellung struktureller Abmessungen und struktureller Festigkeit zur rückseitigen Abstützung der wenigstens einen Person und eine Rücklehnenpolsterung (24) hat, die zumindest auf einen Anlehnflächenabschnitt (23) der Rücklehnenstruktur (21) aufgebracht ist, so dass sie eine Anlehnfläche (25) für die wenigstens eine Person bildet, und
eine Seitenairbageinrichtung (30), die benachbart zu einer seitlichen Rücklehnenbegrenzung (26) in die Rücklehne (20) integriert ist, wobei die Seitenairbageinrichtung (30) so in die Rücklehne (20) integriert ist, dass sie in einer Breitenrichtung (BR) der Sitzanordnung (1) gegenüber einer zu der seitlichen Rücklehnenbegrenzung (26) korrespondierenden Seitenwange (22) der Rücklehnenstruktur (21) zu einer Mitte (20a) der Rücklehne (20) hin versetzt angeordnet ist und in Breitenrichtung (BR) gesehen von der Seitenwange (22) aufseiten der seitlichen Rücklehnenbegrenzung (26) überlappt wird, **dadurch gekennzeichnet, dass** die Sitzpolsterung (14) als Randbereich eine die Sitzfläche (15) höhenmäßig übersteigende Wulst (14a) aufweist, und dass die Sitzanordnung eine Sensoreinrichtung (40) aufweist, mit einem ersten Drucksensor (41), der so in die Wulst (14a) eingreift, dass er eine vonseiten der Sitzfläche (15) schräg von oben aus auf die Wulst (14a) wirkende Druckbelastung erkennen und bei Erkennen solch einer Druckbelastung ein erstes Erkennungssignal erzeugen kann, und mit einem zweiten Drucksensor (42), der so in die Wulst (14a) eingreift, dass er eine vertikal von oben aus auf die Wulst (14a) wirkende Druckbelastung erkennen und bei Erkennen solch einer Druckbelastung ein zweites Erkennungssignal erzeugt, wobei mittels des ersten Erkennungssignales von der elektronischen Steuervorrichtung, mit der die Sensoreinrichtung 30 verbunden ist, ein Warnsignal erzeugt und mittels einer visuellen Ausgabevorrichtung und/oder einer tonerzeugenden Ausgabevorrichtung für die Personen im Fahrgastraum (FR) wahrnehmbar ist, und dass bei Vorliegen des zweiten Erkennungssignales dieses von der elektronischen Steuervorrichtung als das Überlappungssignal erkannt wird und von der elektronischen Steuervorrichtung auf Basis eines Überlappungssignales, wenn eine auf der Sitzanordnung (1) befindliche Person einen an der Rücklehne (20) benachbart zur seitlichen Rücklehnenbegrenzung (26) ausgebildeten nahtförmigen Gaskissenaustrittsbereich (32) der Seitenairbageinrichtung (30) überlappt, ein Deaktivierungssignal an die Seitenairbageinrichtung (30) ausgegeben wird.

2. Sitzanordnung (1) gemäß Anspruch 1, wobei die Seitenwange (22) in Breitenrichtung (BR) der Sitzanordnung (1) gesehen eine solche Breite aufweist, dass sie die Seitenairbageinrichtung (30) aufseiten der seitlichen Rücklehnenbegrenzung (26) vollständig überdeckt.

3. Sitzanordnung (1) gemäß Anspruch 1 oder 2, wobei die Seitenairbageinrichtung (30) in Breitenrichtung (BR) der Sitzanordnung (1) mit einem vorbestimmten Abstand (A1) von der Seitenwange (22) der Rücklehnenstruktur (21) angeordnet ist.

4. Sitzanordnung (1) gemäß einem der Ansprüche 1-3, wobei die Sitzanordnung (1) als Sitzbank für ein als Transporter ausgebildetes Kraftfahrzeug konfiguriert ist, wobei die Sitzstruktur (11) zur Bereitstellung struktureller Abmessungen und struktureller Festigkeit zur sitzenden Aufnahme mehrerer Personen konfiguriert ist, und wobei die Rücklehnenstruktur (21) zur Bereitstellung struktureller Abmessungen und struktureller Festigkeit zur rückenseitigen Abstützung der mehreren Personen konfiguriert ist.

5. Sitzanordnung (1) gemäß Anspruch 4, wobei die Sitzbank als Doppelbeifahrersitzbank für den Transporter konfiguriert ist, wobei die Sitzstruktur (11) zur Bereitstellung struktureller Abmessungen und struktureller Festigkeit zur sitzenden Aufnahme von zwei Personen konfiguriert ist, und wobei die Rücklehnenstruktur (21) zur Bereitstellung struktureller Abmessungen und struktureller Festigkeit zur rückenseitigen Abstützung der zwei Personen konfiguriert ist.

6. Sitzanordnung (1) gemäß Anspruch 5, mit einer Sensoreinrichtung (40), die eingerichtet ist zu erkennen, wenn eine auf der Sitzanordnung (1) befindliche Person einen an der Rücklehne (20) benachbart zur seitlichen Rücklehnenbegrenzung (26) ausgebildeten Gaskissenaustrittsbereich (32) der Seitenairbageinrichtung (30) überlappt, und bei Überlappung ein Überlappungssignal auszugeben, wobei die Sensoreinrichtung (40) funktionell mit der Seitenairbageinrichtung (30) verbunden ist, so dass die Seitenairbageinrichtung (30) bei Ausgabe des Überlappungssignals deaktiviert wird.

7. Sitzanordnung (1) gemäß Anspruch 6, wobei die Sensoreinrichtung (40) benachbart zu einer zu der seitlichen Rücklehnenbegrenzung (26) korrespondierenden seitlichen Sitzbegrenzung (16) in den Sitz (10) integriert ist.

8. Sitzanordnung (1) gemäß Anspruch 7, wobei die Sensoreinrichtung (40) als Drucksensoreinrichtung ausgebildet in die Sitzpolsterung (14) eingreift, so dass die Sensoreinrichtung (40) in einem in Breitenrichtung (BR) der Sitzanordnung (1) eine vorbestimmte Breite aufweisenden seitlichen Randbereich eine Druckbelastung der Sitzpolsterung (14) erkennen und bei Erkennen solch einer Druckbelastung das Überlappungssignal ausgeben kann.

9. Sitzanordnung (1) gemäß Anspruch 8, wobei die Sitzpolsterung (14) als Randbereich eine die Sitzfläche (15) übersteigende Wulst (14a) aufweist, und wobei die Sensoreinrichtung (40) in die Wulst (14a) eingreift, so dass die Sensoreinrichtung (40) eine Druckbelastung der Wulst (14a) erkennen und bei Erkennen einer Druckbelastung der Wulst (14a) das Überlappungssignal ausgeben kann.

10. Sitzanordnung (1) gemäß Anspruch 9, wobei die Sensoreinrichtung (40) einen ersten Drucksensor (41), der so in die Wulst (14a) eingreift, dass er eine vonseiten der Sitzfläche (15) schräg von oben aus auf die Wulst (14a) wirkende Druckbelastung erkennen und bei Erkennen solch einer Druckbelastung ein erstes Erkennungssignal erzeugen kann, und einen zweiten Drucksensor (42) aufweist, der so in die Wulst (14a) eingreift, dass er eine vertikal von oben aus auf die Wulst (14a) wirkende Druckbelastung erkennen und bei Erkennen solch einer Druckbelastung ein zweites Erkennungssignal erzeugen kann, und wobei die Sensoreinrichtung (40) eingerichtet ist, das Überlappungssignal auf Basis von wenigstens einem von dem ersten und dem zweiten Erkennungssignal auszugeben.

## Claims

1. Seat arrangement (1) for a motor vehicle, having:
a seat (10) which has a seat structure (11) for providing structural dimensions and structural strength for accommodating at least one person sitting thereon, and a seat padding (14) which is applied at least to a seat surface portion (13) of the seat structure (11) such that said seat padding forms a seat surface (15) for the at least one person,
a backrest (20) which has a backrest structure (21) for providing structural dimensions and structural strength for the rear-side support of the at least one person, and a backrest padding (24) which is applied at least to a contact surface portion (23) of the backrest structure (21) such that said backrest padding forms a contact surface (25) for the at least one person, and
a side airbag device (30) which is integrated in the backrest (20) adjacent to a lateral backrest boundary (26), wherein the side airbag device (30) is integrated in the backrest (20) in such a manner that, in a width direction (BR) of the seat arrangement (1) in relation to a side member (22) of the backrest structure (21), said side member corresponding to the lateral backrest boundary (26), said side airbag device is arranged offset with respect to a centre (20a) of the backrest (20) and is overlapped, as seen in the width direction (BR), by the side member (22) on the side of the lateral backrest boundary (26), **characterized in that** the seat padding (14) has, as an edge region, a bead (14a) exceeding the seat surface (15) in terms of height, and **in that** the seat arrangement has a sensor device (40), with a first pressure sensor (41) which engages in the bead (14a) in such a manner that said pressure sensor can identify a pressure load acting obliquely from above on the bead (14a) from the side of the seat surface (15) and, on identifying such a pressure load, can generate a first identification signal, and with a second pressure sensor (42) which engages in the bead (14a) in such a manner that said pressure sensor identify a pressure load acting vertically from above on the bead (14a) and, on identifying such a pressure load, generates a second identification signal, wherein, by means of the first identification signal, a warning signal is generated by the electronic control device, to which the sensor device 30 is connected, and is perceptible to people in the passenger compartment (FR) by means of a visual output device and/or a sound-generating output device, and **in that**, when the second identification signal is present, the latter is identified as the overlapping signal by the electronic control device, and a deactivation signal is output to the side airbag device (30) by the electronic control device on the basis of an overlapping signal if a person located on the seat arrangement (1) overlaps a seam-shaped airbag outlet region (32) of the side airbag device (30) that is formed on the backrest (20) adjacent to the lateral backrest boundary (26).

2. Seat arrangement (1) according to Claim 1, wherein the side member (22) has such a width, as seen in the width direction (BR) of the seat arrangement (1), that it completely covers the side airbag device (30) on the side of the lateral backrest boundary (26).

3. Seat arrangement (1) according to Claim 1 or 2, wherein, in the width direction (BR) of the seat arrangement (1), the side airbag device (30) is arranged at a predetermined distance (A1) from the side member (22) of the backrest structure (21).

4. Seat arrangement (1) according to one of Claims 1-3, wherein the seat arrangement (1) is configured as a seat bench for a motor vehicle designed as a transporter, wherein the seat structure (11) is configured for providing structural dimensions and structural strength for accommodating a plurality of people sitting thereon, and wherein the backrest structure (21) is configured for providing structural dimensions and structural strength for the rear-side support of the plurality of people.

5. Seat arrangement (1) according to Claim 4, wherein, the seat bench is configured as a double front-passenger seat bench for the transporter, wherein the seat structure (11) is configured for providing structural dimensions and structural strength for accommodating two people sitting thereon, and wherein the backrest structure (21) is configured for providing structural dimensions and structural strength for the rear-side support of the two people.

6. Seat arrangement (1) according to Claim 5, with a sensor device (40) which is designed to identify when a person located on the seat arrangement (1) overlaps an airbag outlet region (32) of the side airbag device (30) that is formed on the backrest (20) adjacent to the lateral backrest boundary (26), and, in the event of overlapping, to output an overlapping signal, wherein the sensor device (40) is functionally connected to the side airbag device (30) such that the side airbag device (30) is deactivated when the overlapping signal is output.

7. Seat arrangement (1) according to Claim 6, wherein the sensor device (40) is integrated in the seat (10) adjacent to a lateral seat boundary (16) corresponding to the lateral backrest boundary (26).

8. Seat arrangement (1) according to Claim 7, wherein the sensor device (40) in the form of a pressure sensor device engages in the seat padding (14), and therefore the sensor device (40) can identify a pressure load of the seat padding (14) in a lateral edge region having a predetermined width in the width direction (BR) of the seat arrangement (1) and, on identifying such a pressure load, can output the overlapping signal.

9. Seat arrangement (1) according to Claim 8, wherein the seat padding (14) has, as an edge region, a bead (14a) which exceeds the seat surface (15), and wherein the sensor device (40) engages in the bead (14a), and therefore the sensor device (40) can identify a pressure load of the bead (14a) and, on identifying a pressure load of the bead (14a), can output the overlapping signal.

10. Seat arrangement (1) according to Claim 9, wherein the sensor device (40) has a first pressure sensor (41) which engages in the bead (14a) in such a manner that said pressure sensor can identify a pressure load acting obliquely from above on the bead (14a) from the side of the seat surface (15) and, on identifying such a pressure load, can generate a first identification signal, and has a second pressure sensor (42) which engages in the bead (14a) in such a manner that said pressure sensor can identify a pressure load acting vertically from above on the bead (14a) and, on identifying such a pressure load, can generate a second identification signal, and wherein the sensor device (40) is designed to output the overlapping signal on the basis of at least one out of the first and the second identification signal.

## Revendications

1. Système de siège (1) pour un véhicule automobile, présentant:
un siège (10), qui possède une structure de siège (11) destinée à offrir des dimensions de structure et une solidité de structure permettant d'accueillir au moins une personne en position assise ainsi qu'un rembourrage de siège (14), qui est placé au moins sur une partie de surface d'assise (13) de la structure de siège (11), de telle manière qu'il forme une surface d'assise (15) pour ladite au moins une personne,
un dossier (20), qui possède une structure de dossier (21) destinée à offrir des dimensions de structure et une solidité de structure permettant d'assurer un appui dorsal à ladite au moins une personne ainsi qu'un rembourrage de dossier (24), qui est placé au moins sur une partie de surface de dossier (23) de la structure de dossier (21), de telle manière qu'il forme une surface d'appui (25) pour ladite au moins une personne, et
un système de coussin gonflable latéral (30), qui est intégré dans le dossier (20) à proximité d'un bord latéral de dossier (26), dans lequel le système de coussin gonflable latéral (30) est intégré dans le dossier (20) de telle manière qu'il soit décalé en direction d'un milieu (20a) du dossier (20) dans une direction de largeur (BR) du système de siège (1) par rapport à une joue latérale (22) de la structure de dossier (21) correspondant au bord latéral de dossier (26) et que, vu dans la direction de largeur (BR), il soit recouvert par la joue latérale (22) du côté du bord latéral de dossier (26),
**caractérisé en ce que**
le rembourrage de siège (14) présente comme zone de bord un bourrelet (14a) dépassant en hauteur la surface d'assise (15), et
le système de siège présente un dispositif de capteurs (40), avec un premier capteur de pression (41), qui s'engage dans le bourrelet (14a) de telle manière qu'il puisse détecter une charge de pression agissant à partir de la surface d'assise (15) en oblique par le haut sur le bourrelet (14a) et émettre un premier signal de détection en cas de détection d'une telle charge de pression, et avec un deuxième capteur de pression (42), qui s'engage dans le bourrelet (14a) de telle manière qu'il détectent une charge de pression agissant verticalement de haut en bas sur le bourrelet (14a) et qu'il produise un deuxième signal de détection en cas de détection d'une telle charge de pression, dans lequel un signal d'avertissement est produit au moyen du premier signal de détection par le dispositif de commande électronique, auquel le dispositif de capteurs 30 est connecté et est perceptible par les personnes présentes dans l'habitacle (FR) au moyen d'un dispositif d'émission visuelle et/ou d'un dispositif d'émission acoustique, et
en cas de présence du deuxième signal de détection, celui-ci est reconnu par le dispositif de commande électronique comme signal de recouvrement et un signal de désactivation est envoyé au système de coussin gonflable latéral par le dispositif de commande électronique sur la base d'un signal de recouvrement, lorsqu'une personne se trouvant sur le système de siège (1) recouvre une zone de sortie de coussin de gaz (32) du système de coussin gonflable latéral (30) en forme de couture réalisée sur le dossier (20) à proximité du bord latéral de coussin gonflable (26).

2. Système de siège (1) selon la revendication 1, dans lequel la joue latérale (22), vue dans la direction de largeur (BR) du système de siège (1), présente une largeur telle qu'elle recouvre entièrement le système de coussin gonflable latéral (30) du côté du bord latéral de dossier (26).

3. Système de siège (1) selon la revendication 1 ou 2, dans lequel le système de coussin gonflable latéral (30) est disposé, dans la direction de largeur (BR) du système de siège (1), à une distance prédéterminée (A1) de la joue latérale (22) de la structure de dossier (21).

4. Système de siège (1) selon l'une quelconque des revendications 1 à 3, dans lequel le système de siège (1) est configuré en forme de banquette pour un véhicule automobile constitué par une camionnette, dans lequel la structure de siège (11) est configurée de façon à offrir des dimensions de structure et une solidité de structure permettant d'accueillir plusieurs personnes en position assise, et dans lequel la structure de dossier (21) est configurée de façon à offrir des dimensions de structure et une solidité de structure permettant d'assurer un appui dorsal auxdites plusieurs personnes.

5. Système de siège (1) selon la revendication 4, dans lequel la banquette de siège est configurée en forme de banquette double pour passager pour la camionnette, dans lequel la structure de siège (11) est configurée de façon à offrir des dimensions de structure et une solidité de structure permettant d'accueillir deux personnes en position assise, et dans lequel la structure de dossier (21) est configurée de façon à offrir des dimensions de structure et une solidité de structure permettant d'assurer un appui dorsal auxdites deux personnes.

6. Système de siège (1) selon la revendication 5, avec un dispositif de capteurs (40), qui est conçu pour détecter lorsqu'une personne se trouvant sur le système de siège (1) recouvre une zone de sortie de coussin de gaz (32) du système de coussin gonflable (30) formée sur le dossier (20) à proximité du bord latéral de dossier (26), et en cas de recouvrement pour émettre un signal de recouvrement, dans lequel le dispositif de capteurs (40) est en liaison fonctionnelle avec le système de coussin gonflable latéral (30), de telle manière que le système de coussin gonflable latéral (30) soit désactivé lors de l'émission du signal de recouvrement.

7. Système de siège (1) selon la revendication 6, dans lequel le dispositif de capteurs (40) est intégré dans le siège (10) à proximité d'un bord latéral de siège (16) correspondant au bord latéral de dossier (26).

8. Système de siège (1) selon la revendication 7, dans lequel le dispositif de capteurs (40) réalisé sous forme de dispositif de capteurs de pression s'engage dans le rembourrage de siège (14), de telle manière que le dispositif de capteurs (40) puisse détecter une charge de pression sur le rembourrage de siège (14) dans une région de bord latéral présentant une largeur prédéterminée dans la direction de largeur (BR) du système de siège (1) et émettre le signal de recouvrement en cas de détection d'une telle charge de pression.

9. Système de siège (1) selon la revendication 8, dans lequel le rembourrage de siège (14) présente comme zone de bord un bourrelet (14a) dépassant la surface d'assise (15), et dans lequel le dispositif de capteurs (40) s'engage dans le bourrelet (14a), de telle manière que le dispositif de capteurs (40) puisse détecter une charge de pression sur le bourrelet (14a) et émettre le signal de recouvrement en cas de détection d'une charge de pression sur le bourrelet (14a).

10. Système de siège (1) selon la revendication 9, dans lequel le dispositif de capteurs (40) présente un premier capteur de pression (41), qui s'engage dans le bourrelet (14a) de telle manière qu'il puisse détecter une charge de pression agissant à partir de la surface d'assise (15) en oblique par le haut sur le bourrelet (14a) et émettre un premier signal de détection en cas de détection d'une telle charge de pression, et un deuxième capteur de pression (42), qui s'engage dans le bourrelet (14a) de telle manière qu'il puisse détecter une charge de pression agissant verticalement de haut en bas sur le bourrelet (14a) et produire un deuxième signal de détection en cas de détection d'une telle charge de pression, et dans lequel le dispositif de capteurs (40) est conçu pour émettre le signal de recouvrement sur la base d'au moins un du premier et du deuxième signal de détection.
